Europäisches Patentamt

European Patent Office

Office européen des brevets

(19)

(11) Publication number: **0 234 128**
**A1**

(12)

# EUROPEAN PATENT APPLICATION

(21) Application number: **86310195.2**

(22) Date of filing: **29.12.86**

(51) Int. Cl.³: **G 02 B 6/28**
**G 02 B 6/30**

(30) Priority: **30.12.85 GB 8531869**
**30.12.85 GB 8531870**

(43) Date of publication of application:
**02.09.87 Bulletin 87/36**

(84) Designated Contracting States:
**AT BE CH DE ES FR GB GR IT LI LU NL SE**

(71) Applicant: **BRITISH TELECOMMUNICATIONS public limited company**
**British Telecom Centre, 81 Newgate Street**
**London EC1A 7AJ(GB)**

(72) Inventor: **Millar, Colin Anderson**
**20 Dellwood Avenue**
**Felixstowe Suffolk(GB)**

(72) Inventor: **Mallinson, Stephen Robert**
**25 Andros Close**
**Ipswich Suffolk(GB)**

(72) Inventor: **Brierley, Michael Charles**
**33 Westland**
**Martlesham HeathIpswichSuffolk IP5 7SU(GB)**

(74) Representative: **Kennington, Penelope Anne et al,**
**British Telecom Intellectual Property Unit Room 1304, 151**
**Gower Street**
**London WC1E 6BA(GB)**

(54) **Optical coupler.**

(57) An optical coupler comprises two wave guides and an inntermediate wave guiding structure such that coupling from one to the second wave guide is by way of the intermediate wave guiding structure. The latter may have a higher refractive index than the effective refractive index of, and higher order propagation modes than the neighbouring waveguides, provided the phase velocities of the respective propagation modes match.

The device may be used as an optical mode transformer.

*Fig.1.*

BT CASE: 23404
WP NO:   0370P

## OPTICAL COUPLER DEVICES

This invention relates to optical coupler devices, and has important though not exclusive application in the field of optical communications.

A frequency selective optical coupler device is known from US 4026632 which is capable of transferring energy at selected wavelengths between dissimilar wave guides by interposing between the wave guides an intermediate wave guide which is of a higher refractive index than either of the two wave guides and which is arranged to have several propagation modes, of which one is phase velocity matched to propagation in the first wave guide, another one to propagation in the second wave guide, and coupling between the two wave guides takes place by energy transfer in the intermediate wave guide between two modes propagating in that intermediate wave guide.

According to the present invention an optical coupler device comprises first and second wave guide structures and an intermediate wave guiding structure, wherein coupling from a mode in the first wave guide structure to a mode in the second is via a single propagation mode in said intermediate wave guiding structure of higher order than said modes in the first and second structures, the phase velocities of all three propagation modes being substantially matched.

The wave guide structures are selected so that coupling from a plurality of modes in the first structure into respective modes in the second structure takes place via respective modes in the intermediate structure.

The first and/or second wave guide structure may comprise, for example, an optical single mode fibre.

In another form of the invention, at least one of the wave guide structures comprises a wave guide associated with, or forming part of, an integrated optics device.

The intermediate wave guiding structure preferably comprises a thin film extending along and transversely to the first and/or second wave guide structure. The transverse dimension of the intermediate wave guiding structure may be of the same order as the transverse dimension of the first and/or the second wave guide.

The intermediate wave guiding structure may comprise a layer of material which is of a refractive index higher than the effective refractive index of the neighbouring wave guide structures and which is capable of supporting a propagation mode of a higher order than, but matching the phase velocity of, propagation mode or modes in the neighbouring wave guide structures.

The refractive index (n) of a material is understood herein to be the bulk refractive index of the material as determined by means of an Abbe refractometer, for example. The effective refractive index (ne) is the ratio of the speed of light in vacuo (c) to the phase velocity (vp) of the guided mode concerned.

Transfer of energy between the two wave guides occurs only at wavelengths in the wavelength region where the phase velocities of the modes in the three structures are equal.

The intermediate wave guiding structure may be uniform or non-uniform in composition, and is preferably of uniform refractive index. The structure is ideally planar, and may comprise a rectangular waveguide.

The intermediate wave guiding structure may be in contact with the neighbouring wave guide structures, or may be spaced therefrom by one or more intervening layers or an airgap, for example. However, close proximity between the intermediate wave guiding structure and both of the neighbouring waveguides is important for strong field coupling and therefore low loss transfer.

Also, the coupling device may be provided with means, such as electrodes, for example, to modify the optical properties of the wave guide structures and/or the intermediate wave guiding structure, thereby to control the optical properties of the coupler device.

A coupler device according to the present invention may be used to form an optical mode transformer which enables optical coupling between two or more wave guide structures of dissimilar propagation properties, provided the phase velocities therein are nominally equal.

Instead, a coupler device according to the present invention may be used to form optical modulators, routing switches wavelength selective filters, and other devices operating on an optical communications signal..

It is an important aspect of the present invention that the refractive index of the intermediate wave guiding structure may be appreciably greater than the effective index of the first and/or the second wave guide structure, that is to say, for the case where the wave guide structures comprise optical fibres and the intermediate wave guiding structure a film, for example, that

$$n(\text{film}) > ne(\text{fibre}),$$

provided that

$$ne(\text{film}) \text{ approximately} = ne(\text{fibre})$$

for the propagation mode or modes (and the optical wavelength) concerned.

Moreover, the refractive index of the second wave guide structure need not be the same as that of the first wave guide structure, provided that the phase velocities of the respective propagation modes are again properly matched.

The refractive index of the intermediate wave guiding structure is conveniently at least $1^o/o$ to $10^o/o$, and preferably at least $15^o/o$ to $20^o/o$, greater than the effective refractive index of at least one of the neighbouring wave guide structures. However, it has been calculated that efficient coupling will be obtained even in cases where the refractive index of the intermediate wave guiding layer is $60^o/o$ higher than the effective refractive index of the neighbouring wave guide structure. Equally, the refractive indexes of the first and second wave guide structures may be substantially different, provided the intermediate wave guiding structure provides the required matching of phase velocities.

The present invention will now be described further by way of examples with reference to the accompanying drawings, of which:-

Figure 1 shows a schematic section through a first four port coupler device in accordance with an embodiment of the present invention;

Figure 2 is a mode dispersion diagram;

Figure 3 shows, in graphs 3a and 3b, the optical output spectrum against input wavelength at the output ports A and B respectively of the device of Figure 1; and

Figure 4 shows a schematic section through a second coupler device in accordance with an embodiment of the present invention.

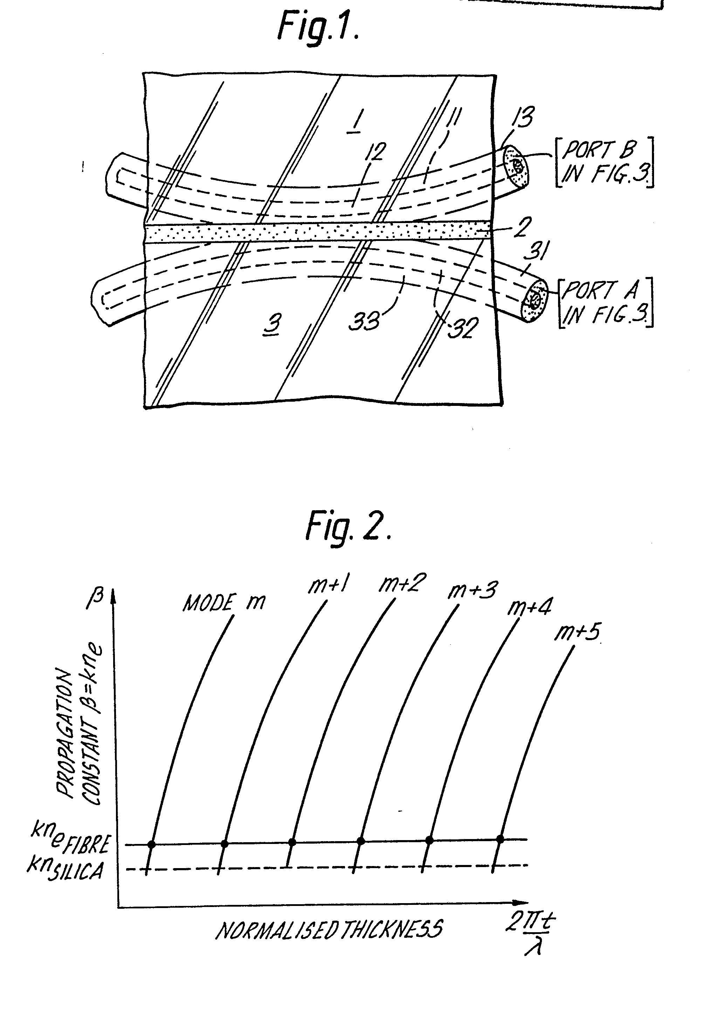

Referring first to Figure 1 of the drawings, an optical coupler device in accordance with the present invention comprises two polished optical fibre half-couplers 1 and 3, each incorporating an optical single mode fibre wave guide, 11 and 31 respectively, and an intermediate wave guiding structure formed by a thin film 2. Optical fibre half-couplers of this type are described, for example, by B. Nayar "Int Optics", Eds. Nolting and Ulrich, Springer Series in Opt. Sci., Vol. 48, Springer Verlag 1985. The construction of the polished half-couplers as such is not of the essence of the present invention and hence need not be discussed here in detail. For the present purposes it is sufficient to note that the fibres 11 and 31 were standard British Telecom Type "B" single mode fibres, that the radius of fibre curvature in each half-coupler was 25cm, and that the cladding of each fibre 11, 31, was removed by polishing to within 1μm of the respective fibre cores 12 and 32.

Coupler devices such as the device shown in Figure 1 are generically termed four port devices in that they normally possess two input and two output ports, but it should be observed that the term "four port device" should, in keeping with common practice, be understood as including also devices in which only three ports are physically present to the outside (eg one input and two output ports, or vice versa).

Optical fibres such as those used in the fabrication of the half-couplers have an effective refractive index of approximately 1.45 at a wavelength of nominally 1.5μm.

The intermediate wave guiding structure was formed by a film 2 of methyl salycilate. The refractive index of the material forming the film was approximately 1.52, a difference of approximately 5$^o$/o as compared with the fibres. The thickness of the film was obtained by indirect measurement and computation as 39μm. The propagation mode in the film 2 at a wavelength of 1.5μm was 24, as compared to the fundamental mode (m=0) propagating in the single mode optical fibres 11, 31. The film may comprise other refractive index liquids, since as those supplied by Cargille Inc., of 55 Cedar Grove, New Jersey, USA. The thickness of the film is suitably in the range 1-200 μm.

The present invention is based on the surprising discovery by the applicants that a single propagation mode of higher order in the intermediate wave guide can be used to couple energy from one of the wave guides to the other subject to the requirement that only the phase velocities in the adjacent wave guides 1, 3 need to be matched, but not so the refractive indices nor the mode number of the propagation mode. The material and thickness of the intermediate wave guide 2 are selected so that, for the range of wavelengths over which the device is to function, there is a mode (not the fundamental) for which the phase velocity of that mode matches the phase velocities for the wave guides 1, 3; the order of the mode is immaterial. There is a very wide range of materials and thicknesses which are suitable; there is no requirement for close tolerances. Thus, the present invention provides coupling into the intermediate wave guide 2 such that optical power flows longitudinally along its axis as bound modes.

The order of the propagation mode in the intermediate wave guide 2 may vary from 1 to about 200, depending on which mode or modes match those in the neighbouring wave guides in phase velocity.

Referring now to Figure 2, this is a graph showing the variation in propagation constant $\beta$, where $\beta = kn_e$, with normalised thickness $2\pi t/\lambda$ where t is the thickness of the overlay.

For all the materials of the device, the variation in the material dispersion (ie the variation of the index of the material with wavelength) has been ignored.

As can be seen from the graph, $kn_e$ for the fibres (which are identical in this example) remains approximately constant over a large wavelength region. For the film, each mode has an increasing $kn_{e\,fibre}$ as the normalised thickness increases. Where the lines for the modes intersect the line for the fibre, there is coupling between the fundamental mode in the fibre 11 to the higher order film modes m, m+1, .... m+5 etc. and thence to the fundamental mode in the second fibre 31. Thus, there is wavelength selective coupling between the two fibres.

Thus it will be seen that the dispersion characteristics $dne/d\lambda$ of the intermediate waveguide differ from those of the fibres, thereby permitting transfer of the energy between the fibres only at wavelengths in regions where the phase velocities of the fundamental mode in the fibres and a mode or modes in the intermediate waveguide are equal.

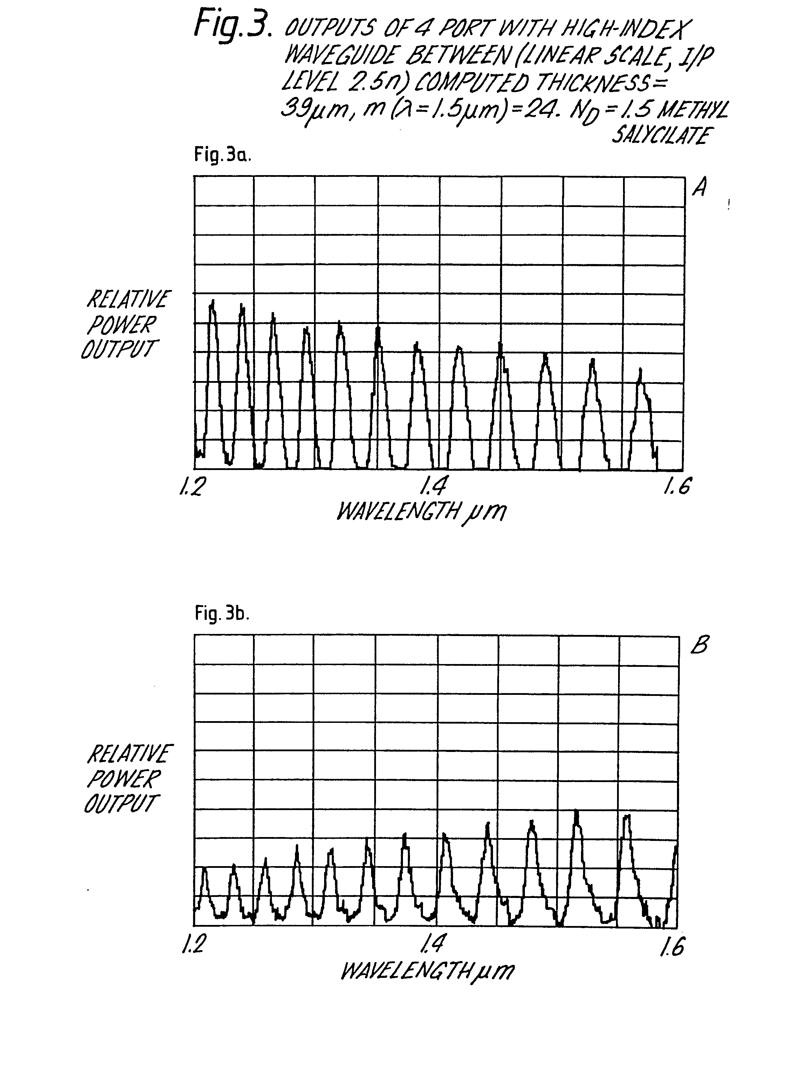

Figure 3 shows the output of the four port coupler of Figure 1 at port A (Fig. 3a) and port B (Fig. 3b), and the wavelength selectivity of the coupling can be clearly seen.

The device can find many applications; examples include wavelength multiplexer/demultiplexers and switches.

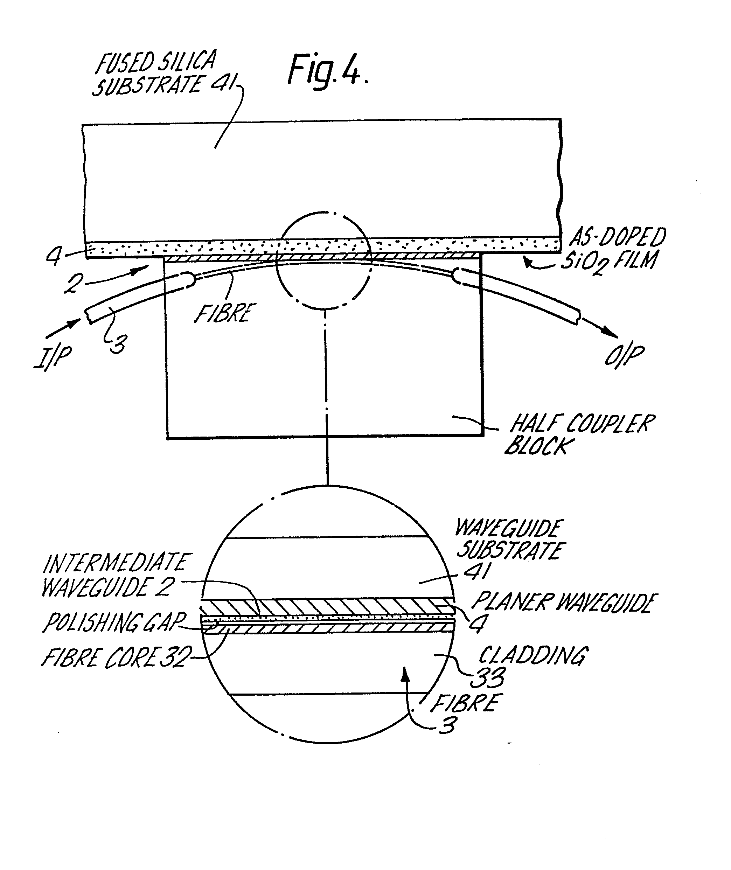

Figure 4 illustrates an application of the present invention to coupling between a single mode optical fibre wave guide 3 and a planar wave guide 4 on a fused silica substrate 41 via an intermediate wave guide 2. Where the order of the propagation modes of the wave guide 4 do not match that in the fibre 3, the interposing of a wave guide 2 with a propagation mode which is higher than that in the fibre 3 (which is the fundamental) enables a mode transformation to be performed between the fibre 3 and the wave guide 4, provided the phase velocity of at least one higher order propagation mode in the intermediate wave guide 2 matches that of the lower order mode in the fibre 3 as well as the phase velocity of a low order mode in the planar wave guide 4. A wave guide of material such as As doped silica has been found to be suitable for the planar wave guide 4.

It should be observed that for the mode transformer of Figure 4 (and also for the coupler of Figure 1) to provide efficient coupling between the fibre wave guide 3 and the intermediate wave guide 2, the two wave guides must provide coupling interaction over a sufficient length, which can be readily determined by trial and error experiment. Equally a sufficient interaction length must be provided between the intermediate wave guide 2 and the further wave guide overlying it.

Whether or not the intermediate wave guide 2 is indeed a wave guide may be determined, for example, by ascertaining if guided propagation occurs in it beyond the region where coupling occurs.

In most cases, the two wave guides and the intermediate structure or film will be uniform in composition and refractive index, but this is not essential. Also, the wave guides and intermediate structure may be placed in contact with one another, or spaced apart a small distance. The constituents are generally closely spaced so there is strong field coupling between the intermediate layer and each of the wave guides.

For incoming optical signals having a spread of wavelengths, or discrete channels, the coupler device can be arranged by choice of materials, dimensions and so on, so that coupling occurs only at selected wavelengths.

If desired, the coupler device may be provided with means to modify the optical properties of the wave guides or intermediate structure of film. For example, the thickness or index of the intermediate film may be varied, eg using the piezoelectric effect or liquid crystal films.

For subject matter related to the present invention, the reader is referred to a co-pending patent application "Optical Coupling" of even date and in the name of the present applicants, claiming priority from UK Patent Applications 8531869 and 8531870 filed on 30th December 1985; the contents of that application is incorporated herein by reference.

0234128

## CLAIMS

1. An optical coupler device comprising first and second wave guide structures and an intermediate wave guiding structure, wherein coupling from a mode in the first wave guide structure to a mode in the second is via a single propagation mode in said intermediate wave guiding structure of higher order than said modes in the first and second wave guide structures, the phase velocities of all three propagation modes being substantially matched.

2. An optical coupler device as claimed in claim 1, wherein the change in the effective refractive index with respect to wavelength of the intermediate wave guiding structure differs from the change in that index in either or both of the first and second wave guide structures, thereby permitting transfer of energy between said first and second structures only at wavelengths in the region where the phase velocities of modes in the wave guides are substantially equal.

3. An optical coupler device as claimed in any one of claim 1 or claim 2, wherein the intermediate wave guiding structure comprises a layer of material which is of a refractive index higher than the effective refractive index of the neighbouring wave guide structures.

4. An optical coupler device as claimed in any of claims 1 to 3, wherein the intermediate wave guiding structure is arranged for propagation of optical energy therein to occur at a propagation mode or propagation modes of higher order than the propagation mode or modes in at least one of the first and second wave guide structures.

5. An optical coupler device as claimed in any of claims 1 to 4, wherein at least one of the first and second wave guide structure comprises an optical fibre.

6. An optical coupler device as claimed in any one of claims 1 to 5, wherein at least one of the first and second wave guide structures comprises a wave guide associated with, or forming part of, an integrated optics device.

7. An optical coupler device as claimed in any one of claims 1 to 6, wherein the intermediate wave guiding structure comprises a thin film extending along and transversely to the first and/or second wave guide structure.

8. An optical coupler device as claimed in any one of claims 1 to 7, wherein the transverse dimension of the intermediate wave guiding structure is of the same order as the transverse dimension of the first and/or the second wave guide.

9. An optical coupler device as claimed in any one of claims 1 to 8, wherein the intermediate wave guiding structure is uniform in composition.

10. An optical coupler device as claimed in any one of claims 1 to 9, wherein the intermediate wave guiding structure is of uniform refractive index.

11. An optical coupler device as claimed in any one of claims 1 to 10, wherein the intermediate wave guiding structure is in contact with the neighbouring wave guide structures.

12. An optical coupler device as claimed in any one of claims 1 to 11, wherein the intermediate wave guiding structure is spaced from at least one neighbouring wave guide structure.

13. An optical coupler device as claimed in any one of claims 1 to 12, wherein the intermediate wave guiding structure is arranged for optical coupling to occur at selected wave lengths only.

14. An optical coupler device as claimed in any one of claims 1 to 12, wherein the coupling device is provided with means to modify the optical properties of the wave guide structure and/or the intermediate wave guiding structure.

15. An optical mode transformer comprising a coupler device as claimed in any one of claims 1 to 14.

16. An optical device operating on an optical communications signal, including a coupler device as claimed in any one of claims 1 to 14.

17. An optical device as claimed in any one of claims 1 to 16, wherein the refractive index of the second wave guide structure is different from that of the first wave guide structure.

18. An optical device as claimed in any one of claims 1 to 17, wherein the refractive index of the intermediate wave guiding structure is at least $1^{0}/o$ to $20^{0}/o$ greater than the effective refractive index of at least one of the neighbouring wave guide structures.

19. An optical device as claimed in any one of claims 1 to 17, wherein the refractive index of the intermediate wave guiding structure is at least $15^{0}/o$ to $20^{0}/o$ greater than the effective refractive index of at least one of the neighbouring wave guide structures.

## Fig.1.

PORT B
IN FIG.3

PORT A
IN FIG.3

## Fig. 2.

MODE m  m+1  m+2  m+3  m+4  m+5

$\beta$

PROPAGATION CONSTANT $\beta = kn_e$

$kn_{e\,FIBRE}$
$kn_{SILICA}$

NORMALISED THICKNESS

$\frac{2\pi t}{\lambda}$

Fig.3. OUTPUTS OF 4 PORT WITH HIGH-INDEX
WAVEGUIDE BETWEEN (LINEAR SCALE, I/P
LEVEL 2.5n) COMPUTED THICKNESS=
39μm, m(λ=1.5μm)=24. $N_D$=1.5 METHYL
SALYCILATE

Fig.3a.

RELATIVE POWER OUTPUT

WAVELENGTH μm

Fig.3b.

RELATIVE POWER OUTPUT

WAVELENGTH μm

Fig.4.

FUSED SILICA SUBSTRATE 41

AS-DOPED SiO₂ FILM

4
2
FIBRE
I/P
3
O/P

HALF COUPLER BLOCK

WAVEGUIDE SUBSTRATE 41

INTERMEDIATE WAVEGUIDE 2
POLISHING GAP
FIBRE CORE 32

PLANER WAVEGUIDE 4

CLADDING 33
FIBRE 3

## EUROPEAN SEARCH REPORT

Application number

EP 86 31 0195

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| D,X | US-A-4 026 632 (K.O. HILL)<br><br>* Column 1, lines 26-42,65,66; column 2, lines 36-38,52; column 3, lines 9-11; figures 1,2,5 * | 1-6,11,13,14,17 | G 02 B 6/28<br>G 02 B 6/30 |
| A | US-A-4 387 954 (J.D. BEASLEY)<br><br>* Column 1, line 66 - column 2, line 7; column 3, line 25 - column 4, line 16; figures 4,5 * | 1,5,7-10 | |
| A | US-A-3 957 341 (H.F. TAYLOR)<br>* Column 3, line 4 - column 4, line 44; figure 7 * | 1-7 | |
| A | PATENT ABSTRACTS OF JAPAN, vol. 3, no. 139 (E-152), 17th November 1979, page 154 E 152; & JP-A-54 118 255 (MATSUSHITA DENKI SANGYO K.K.) 13.09.1979<br>* Whole document * | 1-10 | TECHNICAL FIELDS SEARCHED (Int. Cl.4)<br><br>G 02 B 6/28<br>G 02 B 6/30<br>G 02 B 6/34 |
| A | FR-A-2 278 086 (SIEMENS AG)<br>* Page 2, lines 7,8,13; page 3, lines 4-6; figures 1-6 * | 1 | |
| A | US-A-3 899 235 (J.A. ARNAUD)<br>* Column 2, line 21 - column 3, line 48; figures 1-4 * | 1 | |
| | --- | -/- | |

The present search report has been drawn up for all claims

| Place of search | Date of completion of the search | Examiner |
|---|---|---|
| THE HAGUE | 09-04-1987 | WESBY P.B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

## EUROPEAN SEARCH REPORT

**European Patent Office**

### DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | PATENT ABSTRACTS OF JAPAN, vol. 4, no. 15 (E-170)[106], 5th February 1980; & JP-A-54 156 555 (MITSUBISHI DENKI K.K.) 12-10-1979 --- | 1 | |
| A | PATENT ABSTRACTS OF JAPAN, vol. 7, no. 82 (P-189)[1227], 6th April 1983; & JP-A-58 10 705 (TATEISHI DENKI K.K.) 21-01-1983 ----- | 1 | |

TECHNICAL FIELDS SEARCHED (Int. Cl.4)

The present search report has been drawn up for all claims

| Place of search | Date of completion of the search | Examiner |
|---|---|---|
| THE HAGUE | 09-04-1987 | WESBY P.B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82